## Europäisches Patentamt
## European Patent Office
## Office européen des brevets

(19)

(11) Numéro de publication: **0 282 470**
A1

(12)

# DEMANDE DE BREVET EUROPEEN

(21) Numéro de dépôt: 88870031.7

(22) Date de dépôt: 02.03.88

(51) Int. Cl.⁴: **A 01 G 27/00**

(30) Priorité: **04.03.87 LU 86799**

(43) Date de publication de la demande:
**14.09.88 Bulletin 88/37**

(84) Etats contractants désignés: **ES GR**

(71) Demandeur: **Janssens, Luc**
**Berkenlaan 19**
**B-2610 Wilrijk-Antwerpen (BE)**

(72) Inventeur: **Janssens, Luc**
**Berkenlaan 19**
**B-2610 Wilrijk-Antwerpen (BE)**

(74) Mandataire: **van Malderen, Michel et al**
**p.a. FREYLINGER & ASSOCIES 85/042 Boulevard de la Sauvenière**
**B-4000 Liège (BE)**

(54) Bac d'irrigation et d'humidification de sol.

(57) On décrit un bac d'irrigation et d'humidification des parois latérales (3) perméables à l'eau et un fond (9) imperméabilisé . Il comporte encore un couvercle (6) soudé ou collé, imperméabilisé muni d'un raccord d'alimentation (8) et d'un raccord d'évacuation (10). Mis en série, plusieurs bacs de ce type conviennent bien pour l'humidification de terres séches.

FIG.1

EP 0 282 470 A1

## Description

Bac d'irrigation et d'humidification de sol.

La présente invention est relative à un bac destiné à l'irrigation et l'humidification des terres de plantations d'arbres etc..., dans des régions sèches exigeant une irrigation du sol pour permettre le développement des arbres et plants.

Le but de la présente invention consiste à fournir un bac de construction simple destiné à faciliter la plantation d'arbres, de plants etc.. et permettant le développement desdits arbres, plants etc.. dans des conditions de sol difficiles, notamment des sols irrigués artificiellement.

Un autre but de la présente invention consiste à placer l'arbre, le plant etc.. dans de bonnes conditions d'humidité de sol tout en faisant appel à une irrigation aussi réduite que possible.

Un autre but de la présente invention consiste à réduire les quantités d'eau d'irrigation non utiles, perdues dans le sol desséché.

Conformément à la présente invention, le bac d'irrigation présente des parois latérales en un matériau perméable à l'eau et dont le fond est imperméabilisé.

De préférence, le bac présente une forme essentiellement parallélipipédique et est recouvert d'un couvercle imperméabilisé comportant au moins une ouverture d'admission et/ou un raccord de conduit d'alimentation.

Les bacs de la présente invention sont destinés à être noyés dans le sol à irriguer et peuvent contenir de l'eau ou une solution d'engrais. Le liquide peut suinter au travers des parois latérales perméables et humidifier le sol avoisinant.

Selon une forme d'exécution préférée de la présente invention, le couvercle étanche et imperméable empêchant toute perte d'eau par évaporation comporte également une ouverture d'évacuation et/ou un raccord de conduit d'évacuation. De cette manière, il est possible de raccorder plusieurs bacs en série, à une certaine distance l'un de l'autre de manière à humidifier et irriguer le sol le plus uniformément possible.

Avantageusement, le bac présente une section légèrement trapézoïdale, le fond faisant office de grande base du trapèze. On obtient ainsi une humidification et/ou irrigation du sol la plus uniforme possible.

On a, en effet, constaté que, le bac étant enterré, la croûte supérieure de la terre n'est substantiellement pas humidifiée mais reste sèche et constitue un isolant à l'évaporation de l'eau des couches inférieures humidifiées. Il y a lieu de noter que ceci constitue un contrôle de l'humidification et de la perte d'eau.

L'utilisation d'un fond étanche empêche la perte d'eau par diffusion vers le bas, où l'eau n'est pas nécessaire. Les parties latérales diffusent l'eau dans la terre où elle est à disposition des racines. Dans la terre latérale s'effectue une diffusion de l'eau vers le bas qui permet la mise à disposition de celle-ci aux racines profondes.

Selon une variante de l'invention, ledit bac comporte une paroi extérieure et une paroi intérieure écartée de ladite paroi extérieure et reliée à celle-ci par le bas de manière à former avec celles-ci un volume périphérique destiné à contenir de l'eau, le volume central délimité par la paroi intérieure, étant ouvert par le bas et par le haut et étant destiné à contenir de la terre ainsi qu'un arbre, un plant etc..

Selon une première variante d'exécution de la présente invention, la paroi extérieure est essentiellement étanche à l'eau.

Selon une autre forme d'exécution conforme à la présente invention, la paroi extérieure est également perméable à l'eau.

Le bac de la présente invention peut avantageusement être noyé dans le sol. L'arbre, le plant etc.. est introduit dans la terre remplissant le volume central délimité par la paroi intérieure et le volume périphérique fermé par le bas délimité par la paroi intérieure et par la paroi extérieure est alimenté en eau. Vu l'utilisation d'une paroi intérieure perméable, l'eau peut diffuser à travers la paroi intérieure pour alimenter en eau les racines de l'arbre ou du plant etc.., qui garnissent ladite paroi.

Lorsque la plante est suffisamment développée, les racines progressent par l'ouverture inférieure du volume délimité par la paroi intérieure. L'eau qui n'a pas été absorbée par les racines supérieures diffuse dans le sol et provoque ainsi une bonne irrigation.

Selon une forme d'exécution avantageuse de la présente invention, la paroi extérieure présente une section affectant globalement la forme d'un L sur la patte duquel vient s'appuyer la paroi intérieure. Avantageusement, la paroi intérieure est logée dans un épaulement pratiqué dans la patte du L. Ceci permet de centrer la paroi intérieure par rapport à la paroi extérieure lors de l'assemblage du bac conforme à la présente invention. De préférence, la paroi intérieure est solidarisée par collage à la patte du L qui constitue la section de la paroi extérieure.

Selon une forme d'exécution avantageuse de la présente invention, les parois extérieure et intérieure sont circulaires. Elles peuvent toutefois aussi présenter une section plane rectangulaire, polygonale ou ellyptique ou toute autre forme adéquate.

Avantageusement les parois sont réalisées à partir d'un liant obtenu avec un sulfate de calcium traité spécialement qui offre une haute résistance mécanique, de tenue à l'eau et d'isolation thermique.

Une paroi étanche est de préférence constituée d'un liant gâché à raison de 35 à 40 % d'eau tandis qu'une paroi perméable est de préférence constituée par un liant gâché à raison de 40 à 80 % d'eau.

L'avantage de ce liant consiste en ce que ce matériau est facile à mettre en oeuvre notamment par les populations locales et convient bien pour ce genre d'application car il est bien accepté, en général par les plantes etc..

Un autre avantage de ce liant consiste en ses caractéristiques d'isolation thermique notamment dans les régions dans lesquelles les variations thermiques sont importantes notamment dans les zones désertiques.

On constate que le bac selon la présente invention assure une bonne irrigation du sol à l'endroit de la plantation et minimise les pertes d'eau par diffusion dans le sol à des endroits où elle n'est pas exigée.

L'invention est décrite plus en détail ci-dessous à l'appui des figures annexées dans lesquelles :

- la figure 1 représente le bac de l'invention en perspective,
- la figure 2 représente, en coupe, un bac selon une autre variante de l'invention.

Conformément à une première forme d'exécution de l'invention, ledit bac 1 présente une forme essentiel lement parallélipipédique ou, de préférence, une section transversale trapézoïdale dont la grande base constitue le fond. Selon l'invention, les parois extérieures 3 sont perméables à l'eau et le fond 9 est imperméable. Il est recouvert d'un couvercle imperméable 6 soudé ou collé sur les parois extérieures 3 et muni d'une ouverture et raccord d'alimentation 8 et d'une ouverture et raccord d'évacuation 10.

En vue de l'irrigation et de l'humidification d'un terrain sur lequel des plantes ou arbres sont agencés en rangées parallèles par exemple, on peut disposer plusieurs bacs conformes à l'invention en série, l'ouverture d'évacuation d'un premier bac étant raccordée, par exemple au moyen d'un tuyau souple 21, à l'ouverture d'admission d'un bac suivant, l'ouverture d'évacuation du dernier bac de la série étant obturée. La série de bacs est avantageusement alimentée en eau contenant éventuellement un engrais soluble à partir d'un réservoir ou d'un puits ou autre.

Les divers bacs d'une même série peuvent être disposés à distance l'un de l'autre, par exemple une distance équivalent approximativement à la longueur d'un bac. Vu la perméabilité des parois extérieures dont aussi les parois frontales, les terres entre les bacs sont également humidifiées.

On a constaté que l'humidification des terres et la diffusion de l'eau par suintement se fait de manière contrôlée. En effet, étant donné l'utilisation d'un couvercle étanche, il n'y a aucune perte d'eau par évaporation dans les bacs. Par ailleurs, les bacs étant enterrés, une croûte superficielle de terre sèche forme une couche isolante contre l'évaporation de l'eau d'humidification. Une fois les divers bacs remplis d'eau, toute l'eau alimentant les bacs en vue de maintenir le volume d'eau constant sert à l'irrigation des terres.

Il est bien évident qu'on peut prévoir, en plus, des dispositifs de contrôle et de commande tels que des vannes.

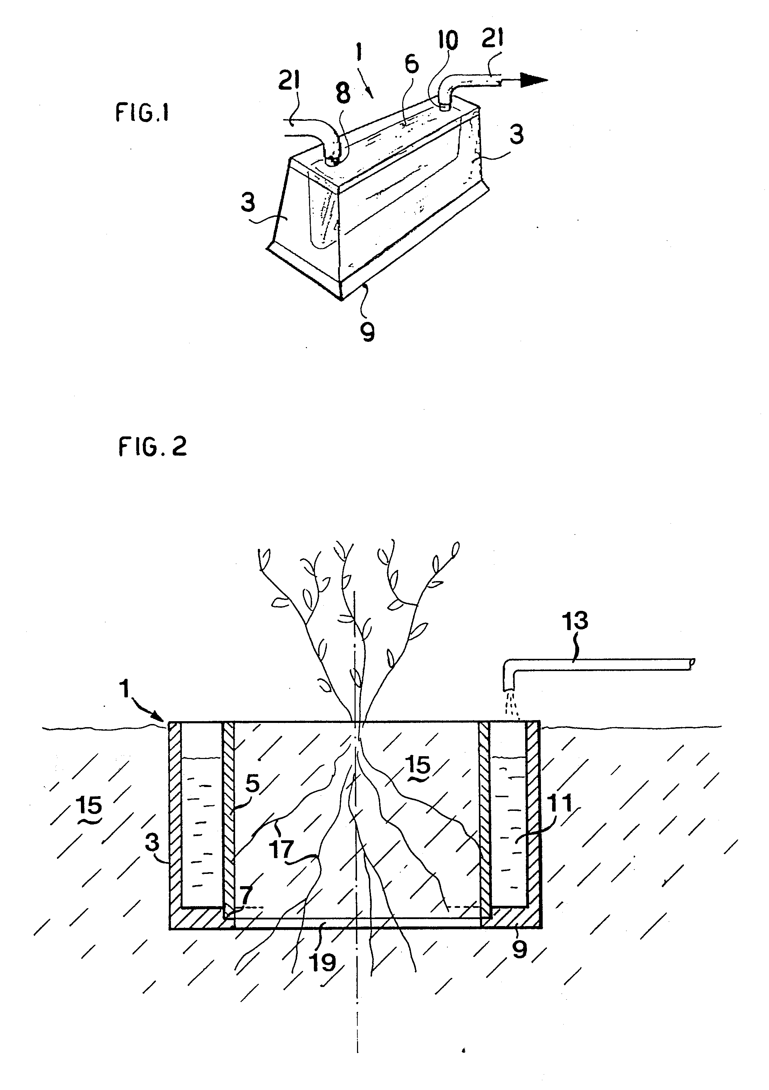

Selon la figure 2, ledit bac 1 comporte une paroi extérieure 3 essentiellement cylindrique et affectant, en section, globalement une forme en L, ainsi qu'une paroi intérieure 5 essentiellement cylindrique et substantiellement concentrique par rapport à la paroi extérieure 3. Ladite paroi intérieure 5 est logée dans un épaulement 7 pratiqué sur l'extrémité de la patte 9 de la section en L de la paroi extérieure 3 et y est rendue solidaire par collage par exemple.

Le bac de plantation conforme à la présente invention délimite ainsi un volume annulaire 11 destiné à être alimenté en eau par un conduit d'alimentation 13.

Le bac est avantageusement noyé dans le sol 15 et contient la plante 17 dans l'espace délimité par la paroi intérieure cylindrique 5. L'eau diffuse à travers la paroi 5 perméable et irrigue le sol contenu dans ledit bac. Les racines 17 garnissent la face intérieure de la paroi 5 et s'étendent, en se développant, vers le bas en traversant l'ouverture 19.

L'utilisation d'une paroi extérieure 3 étanche et d'une paroi intérieure 5 perméable permet de localiser et de concentrer l'irrigation à l'endroit nécessaire, c'est-à-dire à l'endroit où se trouve la plante.

En vue de certaines application particulières, on peut également prévoir une paroi extérieure 3 perméable.

Avantageusement, sous les deux formes d'exécution, le bac consiste en un liant spécial de sulfate de calcium qui est de préférence moulé en vue de l'obtention des formes correspondantes.

La gâchage à raison de 40 à 80 % d'eau peut être utilisé pour les parois perméables et celui gâché à raison de 35 à 40 % d'eau peut être utilisé pour les parois peu perméables qui peuvent être imperméabilisées par la suite.

Le liant à haute résistance convient particulièrement bien pour ce type d'application, étant donné qu'on a constaté, dans le cas de bacs ainsi constitués, une diminution de la formation d'algues et de mousses.

Il est bien évident que la présente invention ne se limite pas aux formes d'exécution décrites mais qu'elle s'étend au cadre défini par les revendications.

Ainsi, on peut également prévoir une matière favorisant la croissance de la plante, de préférence soluble dans l'eau, que l'on dépose dans le volume 11. De cette manière, il est possible de faire diffuser ladite matière dans le sol, à l'endroit où se trouvent les racines.

## Revendications

1. Bac caractérisé en ce que les parois latérales sont constituées par un matériau perméable à l'eau et en ce que le fond est imperméabilisé.

2. Bac selon la revendication 1 caractérisé en ce qu'il présente une forme essentiellement parallélipipédique, ou de préférence une section transversale trapézoïdale, et est recouvert d'un couvercle (6) imperméable comportant une ouverture ou raccord d'admission (8) et éventuellement une ouverture ou raccord d'évacuation (10).

3. Bac selon la revendication 1 ou 2 caractérisé en ce que le couvercle (6) est soudé ou collé au bac (1).

4. Bac (1) selon la revendication 1 caractérisé en ce qu'il comporte une paroi extérieure (3) et une paroi intérieure (5) écartée de ladite paroi extérieure (3) et reliée à celle-ci par le bas de manière à former un volume périphérique (11) destiné à contenir de l'eau, en ce que le volume central (15) délimité par la paroi intérieure (5) est ouvert par le bas (19) et par le haut et est destiné à contenir de la terre ainsi qu'un arbre, un plant etc.. (17).

5. Bac selon la revendication 4 caractérisé en ce que la paroi extérieure (3) est essentiellement étanche à l'eau.

6. Bac selon la revendication 4 caractérisé en ce que la paroi extérieure (3) est perméable à l'eau.

7. Bac selon l'une quelconque des revendications 4 à 6 caractérisé en ce que la paroi extérieure (3) affecte, en section, globalement la forme d'un L sur la patte (9) duquel s'appuye la paroi intérieure.

8. Bac selon la revendication 7 caractérisé en ce que la paroi intérieure (5) est logée dans un épaulement (7) pratiqué dans la patte (9) du L qui constitue la section de la paroi extérieure (3) et en ce que la paroi intérieure (5) est solidarisée par collage ou soudage à la patte (9) du L qui constitue la section de la paroi extérieure (3).

9. Bac selon l'une quelconque des revendications précédentes caractérisé en ce que les parois sont constituées d'un liant de sulfate de calcium traité spécialement donnant une grande résistance mécanique/thermique et de résistance à l'eau.

10. Bac selon la revendication 9 caractérisé en ce que la ou les paroi(s) perméable(s) consiste(nt) essentiellement en un liant de sulfate de calcium gâché à raison de 40 à 80 % d'eau.

11. Bac selon les revendications 1 et 2 et l'une quelconque des revendications 4 à 11 caractérisé en ce que la paroi étanche consiste essentiellement en un liant de sulfate de calcium gâché à raison de 35 à 40 % d'eau.

FIG.1

FIG.2

0282470

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | AU-B- 27 738 (ANDERSON)(1971) <br> * Page 3, paragraphes 4,5; revendication 1 * | 1 | A 01 G 27/00 |
| Y | | 2,4,5,6 | |
| Y | US-A-1 439 973 (OLSON) <br> * Page 1, ligne 83 - page 3, ligne 25; figures 1-4 * | 2 | |
| Y | US-A-1 530 109 (PARSONS) <br> * Page 1, lignes 58-73; figures 1,2 * | 4-6 | |
| X | BE-A- 514 379 (POTAIN) <br> * Page 2, lignes 4-53; figure * | 1 | |
| A | | 4,5 | |
| A | DE-U-8 604 047 (MENZEL) <br> * Page 6, lignes 6-28; figure * | 1,2 | |
| A | FR-A-2 373 962 (HENTTONEN) <br> * Page 3, ligne 29 - page 6, ligne 28; figures 1-5 * | 1,2 | |

DOMAINES TECHNIQUES RECHERCHES (Int. Cl.4)

A 01 G

Le présent rapport a été établi pour toutes les revendications

| Lieu de la recherche | Date d'achèvement de la recherche | Examinateur |
|---|---|---|
| LA HAYE | 15-06-1988 | HERYGERS J.J. |